# EUROPEAN PATENT SPECIFICATION

(11) **EP 2 548 433 B1**
(45) Date of publication and mention of the grant of the patent: **17.02.2016**
(21) Application number: 11174322.5
(22) Date of filing: 18.07.2011
(51) Int. Cl.: A01G 17/00

(54) **Nursery fruit tree**
Baumgartenobstbaum
Arbre fruitier de pépinière

(43) Date of publication of application: 23.01.2013
(73) Proprietor: BVBA Carolus C., 3850 Nieuwerkerken (BE)
(72) Inventor: Carolus, Koen, 3850 Nieuwerkerken (BE); Colda, Geert, 3454 Geetbets-Rummen (BE)
(74) Representative: Vanhalst, Koen

(56) References cited:
- WO-A2-2008/047297
- JACYNA TADEUSZ ET AL: "Induction of lateral shoots in unpruned leaders of young sweet cherry trees", JOURNAL OF FRUIT AND ORNAMENTAL PLANT RESEARCH, vol. 16, 2008, pages 65-73, XP002667285, ISSN: 1231-0948
- ARIE VAN DEN BERG: "Certified Nursery Tree Production in Holland", THE COMPACT FRUIT TREE, vol. 36, 1 January 2003 (2003-01-01), pages 43-45, XP055016766,

## Description

### FIELD OF THE INVENTION

The present invention is situated in the field of horticultural methods of obtaining productive fruit trees, more in particular methods for making nursery trees with improved fruit producing capacity when planted in orchards, and such nursery trees and the orchard trees developing therefrom as such.

### BACKGROUND OF THE INVENTION

In the field of industrial fruit growing, growers buy young trees from tree nurseries (nursery trees) for planting or re-planting orchards. It is of the utmost importance to develop nursery trees that have a maximum fruit-bearing capacity at the start of their growth in the orchard, which will be maintained during the life of the tree (typically 10 or more years).

Fruit nursery trees for commercial fruit production traditionally consist of a rootstock onto which a scion is grafted or budded (sometimes, also a so-called 'interstock' is placed between the rootstock and the scion, particularly when graft-incompatibility between rootstock and scion is suspected). The rootstock interacts with the soil and influences the tolerance of the tree against biotic and abiotic stress factors as well as its growth habitus and the fruit quality. The scion consists of the variety with the desired fruit characteristics. Several horticultural methodologies for producing fruit nursery trees are known in the art and traditionally use intervention onto the tree structure by e.g. cutting out, pruning or defoliation.

An often used fruit nursery tree type is the so-called "knipboom" or "knip tree". The "knip" tree is a two-year old fruit tree with a one-year-old crown. The name "knip" (Dutch for 'cut') stems from the cutting of the tree after one year at about 50 to 80 cm above the ground, depending on the variety. In the next year, the top bud is promoted to create a central leader on which sylleptic shoots will form branches which will bear the fruit, having an implantation angle of almost 90° with respect to the stem. The more horizontally growing branches will produce the most fruit, while the more vertically growing branches will grow faster and hence produce more wood (so-called "suckers"). These "suckers" drain the energy from the plant, which could otherwise go to fruit production.

WO 2008/047297 concerns a method for producing propagating material, in particular entire plants, to be used in tree cultivations of double trunk type and the obtained plant material. The method for producing fruit tree plants of double trunk type, comprises the following steps: transplant of a rootstock in soil for cultivation and cultivation thereof; graft onto said rootstock of propagating material of the variety to be reproduced for producing shoots; selection and/or modification of the position of said shoots with the aim of obtaining two shoots placed opposite each other on each one of said plants and cultivation of said plants until the stadium wherein they can be planted out for the fruit production.

Jacyna Tadeusz et al. (2008, Journal of Fruit and Ornamental Plant Research, vol. 16, 65-73) describes induction of lateral shoots in unpruned leaders of young sweet cherry trees by treatment of the lower one third to one half of the leader with acrylic paint containing benzyladenine (BA) and gibberellins (GA₄₊₇) at the time between bud swell and bud burst, or by removing the upper one third of the leader and treating its remainder with BA and GA₄₊₇.

Manipulation of tree architecture in the nursery stage appears to determine the way the tree will further develop in its later life and is currently subject of extensive research and experimentation.

The goal of the present invention is to provide nursery trees as starting material for establishing fruit production orchards, such nursery trees overcoming the drawbacks of the known fruit nursery trees in terms of the start and maintenance of the productivity in the orchard.

### SUMMARY OF THE INVENTION

The present invention provides a new tree (referred to herein as "new tree"), which has been manipulated at the nursery stage in order to obtain nursery trees that will, upon planting in an orchard, have an optimal fruit bearing capacity, starting earlier in the productive life of the tree and being maintained throughout its life time.

The present invention provides subject-matter as set forth in any one and all of the appending claims 1 to 10.

The invention provides:
1. A nursery fruit tree having an optimal fruit/wood production balance having the following characteristics:
   - crowns of productive branches at three levels, separated by windows sufficiently large to enable optimal light provision for production and ripening of the fruit,
   - an uncut main stem
   - the inclination of the side branches versus the stem approaching 90°.
2. The present invention also provides the nursery fruit tree according to point 1, having a height of between 1.8 and 2.7m.
3. Preferably, the invention provides the nursery fruit tree according to point 1 or 2, wherein:
   - said first branching level is situated at a height of about 25 to 35 % of the tree,
   - said second branching level is situated at a height of about 40 to 55 % of the tree height,
   - said third branching level is situated at a height of about 60 to 70 % of the tree height.
4. Preferably, the invention provides the nursery fruit tree according to points 1, 2, or or 3, comprising sylleptic shoots for the 1^{st} and the 3^{rd} branch level and proleptic shoots for the 2^{nd} branch level.
5. The invention further provides a fruit tree grown from a nursery fruit tree according to any one of points 1 to 4, preferably an orchard fruit tree.
6. The invention further provides a method for obtaining a nursery fruit tree with optimal balance between fruit and wood production, comprising the steps of:
   1) planting a scion of the desired fruit producing variety that has been united with a suitable rootstock or rootstock-interstock,
   2) during the first growth year:
      - harmonising the length of the growing trees and creating a first branching level by inducing branching at the top of the tree, by adding growth regulators when the height of the tree reaches about 20 to 35 % of the desired final height,
      - growth inhibition of main stem, by applying a growth inhibitor when the height of the tree reaches about 40 to 55 % of the desired final height,
      - selective inhibition of side branching,
   3) during the second growth year:
      - cutting away the branches competing with the top of the tree above the second branching level,
      - stimulating elongation and/or induction of proleptic side branches at the second level and/or first branching level,
      - inducing branching at the top of the tree to create a 3^{rd} branching level when the tree reaches a height of about 55 to 70 % of the desired final height, and
      - inhibiting growth of side branches at 1^{st}, 2^{nd} and 3^{rd} level.
7. Preferably, the invention provides a method according to point 6, wherein a selective growth regulator for inducing branching selected from the group comprising: BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), is used.
8. Preferably, the invention provides the method according to points 6 or 7, wherein, a selective inhibitor of the growth of the main stem and/or side branches selected from the group comprising: prohexadione-Ca (cyclohexanecarboxylic acid, 3,5-dioxo-4-(1-oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations, is used to regulate the height of the tree.
9. Preferably, the invention provides the method according to any one of points 6 to 8, wherein growth regulators selected from the group comprising: gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), such substances applied alone or in combinations, are used to stimulate elongation and/or induction of proleptic side branches.
10. The invention further provides a nursery fruit tree obtainable by the method according to any one of points 6 to 9.

The new tree according to the present invention has several potential advantages over the known knip tree as is outlined in Table 1 below.

| **Table 1:** Advantages of new tree according to the invention over the known knip tree | |
|---|---|
| **Knip tree** | **New tree** |
| In tree nursery stage: heavy pruning in first year resulting in strong new growth in the second year | Continuous, balanced growth |
| Negative effects of severe pruning in tree nursery stage are carried over to the orchard and will last for the entire life of the tree (15-20 years) | Positive effects of balanced growth in the tree nursery stage are carried over to the orchard and will last for the entire life of the tree (15-20 years) |
| Long side branches are required to achieve sufficient fruit-producing wood | Shorter side branches deliver the required amount of fruit-producing wood |
| Long side branches means wide spacing in the orchard, resulting in the need to accumulate a lot of new wood in the top of the tree in order to fill up the volume, resulting in problems with light penetration | Closer planting distances, better light penetration and as a result better fruit quality and fruit color |
| Higher planting densities can be obtained by heavy pruning upon planting in the orchard but result in a disturbed balance between vegetative and generative structures | No need to prune to reduce tree width in high density planting |
| Need for intensive pruning after planting, for many years, in order to achieve and maintain the desired tree architecture | No need for intensive and prolonged pruning over the life span of the orchard |
| Fertilization has to be optimized to allow vegetative growth and fruit formation at the same time | Fertilization focuses on fruit production only |
| Labor-intensive | Less pruning means less labor cost |
| Constant risk of disequilibrium between vegetative and generative growth, resulting in competition for nutrients between fruit and branches, as such increasing the occurrence of physiological disorders and the sensitivity to pests and diseases, including post-harvest diseases | Better fruit quality |
| Biannual bearing risks (exhaustion of the plant in one year, resulting very low fruit production in the next year) | Reduced risk of biannual bearing which is very beneficial for varieties that are prone to it |
| Unsuited for the 'mur fruitier' | Well-suited for the 'mur fruitier' which is designed for mechanical harvesting and therefore requires initial uniformity of the tree rows |

In the next table, the maximum expected fruit production of the new tree is compared with that of a normal knip tree in the first five years of production, showing that in the second production year (i.e. the second year after planting in the orchard), the trees already can be at 50% of the maximal fruit production and can reach maximal fruit production from the third production year on.

| **Table 1:** Percentage of production versus maximal production for a knip tree and a new tree of the invention. | | |
|---|---|---|
| Production year | Knip tree | New Tree |
| 1^{st} year | 10% | 10% |
| 2^{nd} year | 30% | 50% |
| 3^{rd} year | 50% | 100% |
| 4^{th} year | 75% | 100% |
| 5^{th} year | 100% | 100% |
| next years | 100% | 100% |

### DESCRIPTION OF THE DRAWINGS

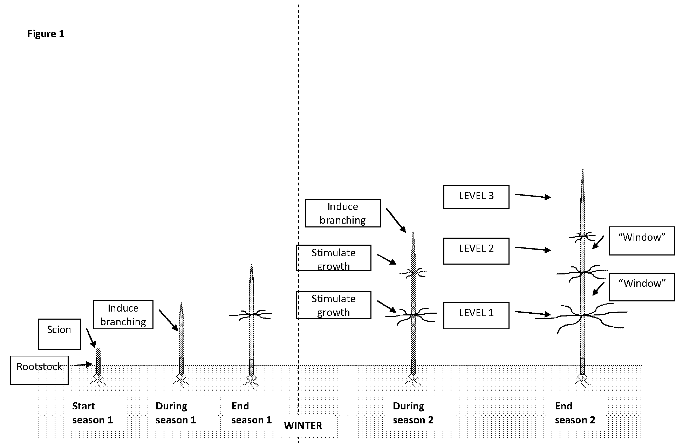

**Fig 1****:** Schematic representation of the methodology for making the new tree of the invention.

### DETAILED DESCRIPTION OF THE PREFERRED EMBODIMENTS

As used herein, the singular forms "a", "an", and "the" include both singular and plural referents unless the context clearly dictates otherwise. By way of example, "an antibody" refers to one or more than one antibody; "an antigen" refers to one or more than one antigen.

The terms "comprising", "comprises" and "comprised of" as used herein are synonymous with "including", "includes" or "containing", "contains", and are inclusive or open-ended and do not exclude additional, non-recited members, elements or method steps.

The term "and/or" as used in the present specification and in the claims implies that the phrases before and after this term are to be considered either as alternatives or in combination.
A **nursery:** is a place where plants are propagated and grown to usable size, e.g. up to the sale to private persons or commercial fruit orchards etc..
A **nursery tree:** is a young plant which has been propagated and raised in a nursery.
**Defoliation:** removal of leaves
**Proleptic shoots:** shoots that form out of buds that were formed the year before, i.e. after a dormant period.
**Sylleptic shoots:** schoots that are formed directly from axilliary buds without a period of dormancy.
**Knip tree or Knipboom:** internationally accepted term for a biannual tree obtained through grafting of a plant variety on a rootstock, growth of the plant in year one, and cutting back the stem at the end of the first year at about 50 to 80cm, followed by promotion of the top bud in the next year to create a central leader on which sylleptic shoots form side branches.

The main characteristics of the new tree according to the invention are as follows:
- a preferred height between 1.8 and 2.7 m at the end of the nursery stage,
- crowns of productive branches at three levels, separated by windows sufficiently large to enable optimal light provision for production and ripening of the fruit.
- the main stem of the tree should not be cut (unless unavoidable due to adverse growing conditions), in order to avoid disturbance of the balance between fruit production and wood production at the start and in the later life of the tree: this has a further advantage of obtaining sylleptic shoots for the 1^{st} and the 3^{rd} level and proleptic shoots for the second level, whereby the inclination of the branches versus the stem approaches 90°, ideal for optimal fruit producing capacity.

In order to obtain a "knip" tree with comparable height and amount of fruit-producing branches as the tree according to the invention, a knip tree requires a number of measures that cause an imbalance between the fruit and wood producing capacity. This results in a loss of production in the first three to four years of the productive life of the traditional "knip" tree. This is due to the fact that the complete tree volume has to be established in a single year, after which a large part is cut away and hence lost.

Furthermore, the fruit-bearing branches of knip trees need to be much longer to reach the same amount of fruit-bearing wood as the new tree of the invention. This is reflected in the way of planting knip trees, i.e. further away from each other. In addition, stronger wood is needed to carry the weight of the longer side branches, which further results in problems with regard to the provision of light onto the fruit. Alternatively, the side branches have to be cut, resulting in a further imbalance between the fruit and wood producing capacity of the tree and hence in a reduction of fruit production and fruit quality due to increased concentrations of sodium and potassium and reduced concentrations of magnesium en calcium. This can result in problems of e.g. occurrence of "bitter pit" or other physiological disorders, or an increased sensitivity for fungal growth during storage or other pre- and postharvest pests and diseases.

Using the new tree of the invention in orchards has the advantage that the grower or cultivator can direct the complete growing process of the trees towards fruit production, since the architecture of the new tree is already the architecture needed in the adult life of the tree. No focus on production of wood for additional branching etc. is needed, resulting in less loss of energy.

The ability of the grower to focus (irrigation, crop protection, fertilization, pruning, etc.) on the fruit production will both improve the quality of the fruit and will enhance the production level in the early production years. While with the knip tree, a lot of energy still has to be invested in the architecture (wood production) of the tree, the new tree of the invention can immediately start producing fruit after planting in the orchard.

The new tree can develop in all tranquility in the nursery in two years. All energy in these two years is sent to the correct places in order to obtain a tree architecture with an ideal production volume and an optimal balance between fruit and wood production.

In the orchard, the new tree according to the invention can immediately start producing fruit. The continuity of said production is also maintained, due to the generative properties of the new tree of the invention. The risk of alternate bearing is reduced by establishing an optimal number of fruits per tree, avoiding exhaustion of the tree. This, in combination with an improved light penetration onto the fruit due to the tree architecture, results in a continuous productivity.

Next to the advantages in fruit production and quality, the new tree will also reduce the labor normally needed to obtain a good fruit bearing tree from a knip tree. No time and energy is wasted on the establishment of the tree architecture, wood growth, cutting, etc.

Also, the new tree will enhance the operational stability of fruit growing businesses. Not all growers have the skills to achieve optimal architecture, which may result in loss of productivity. The new tree type greatly reduces the involvement of the grower in establishing architecture in the orchard and as such reduces the risk of errors.

The new tree architecture is especially suitable for the "mur frutier" system, since the side branches are already divided over the entire length of the tree stem.

The method for obtaining the new tree of the invention typically comprises the creation in the nursery of a ready-to-use tree type, characterized in that it is a tall tree (typically between 1.8 and 2.7 m depending on the variety), in pyramidal form, having three clearly distinguishable branching levels with an intersecting "window" using a unique combination and sequence of a number of known horticultural techniques such as grafting and occulation, pruning, defoliation, curving, bending, tearing, trimming, topping, girdling, ring barking, bark ringing, scoring, banding, regulating branching and growth using plant growth regulators, in a period of 1, 2 or more years, preferably 2 years.

A new tree according to the invention is created by joining a rootstock (or rootstock with interstock) with a scion of the desired fruit producing variety by means of commonly known horticultural techniques, e.g. whip and tongue grafting, splice grafting, T-grafting, V-grafting, side grafting, side-veneer grafting, cleft grafting, saddle grafting , bark grafting (veneer grafting), splice grafting, omega-grafting, chip-budding, occulation, stub grafting, shield budding, T-budding, inverted T-budding, patch budding, double shield budding, flute budding, etc.

During the first season of growth of the united rootstock-scion or rootstock-interstockscion, a number of horticultural techniques are performed to obtain an annual plant with a height of about 40 to 55 % of the final desired height, with sylleptic shoots at the level of the first branching level (Fig. 1).

At the start of the second growth season, the top of the tree is normally not pruned or cut. Under unforeseen circumstances, some pruning can be allowed (e.g. frozen buds, heterogeneous growth height due to adverse growing conditions).

If the formation of fruit bearing branches at the first branching level was not sufficient after the first growth season, it can be corrected through carving or other techniques for the induction of proleptic shoots.

All horticultural techniques used during the second growth season (Fig. 1) are next performed to obtain a pyramidal shape with three levels of branching with intersecting windows and desired tree height, using plant growth regulators or other techniques to induce branching and to control the intersection between the branched levels.

The invention is illustrated by the following non-limiting examples

### EXAMPLES

### Method for producing the New Tree:

An exemplary method for obtaining a new tree according to the present invention comprises the steps of:
1) planting a scion of the desired fruit producing variety that has been united with a suitable rootstock or rootstock with interstock,
2) during the first growth season:
   - harmonising the length of the growing trees and inducing at the same time branching when the trees reach a height of approx. 20-35 % of the desired final tree height, by adding growth regulators to the top such as BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations
   - growth inhibition of main stem when the tree has reached a height of approx. 40 to 55 % of the desired final tree height by applying a growth inhibitor to the top such prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminoside (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations
   - selective inhibition of side branching on the first branching level to a branch length that is less than the final desired length, typically less than 5 % of the desired final tree height, by applying prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations.
3) during the second growth season:
   - cutting away the branches competing with the top of the tree above the second branching level,
   - if required, stimulating the production and/or elongation of proleptic side branches at the second branching level and/or first branching level by applying growth inducers and/or branching agents, such as gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations
   - inducing the 3^{rd} branching level when the tree reaches a height of approx. 55 to 70 % of the desired final height by applying to the top growth regulators such as BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations
   - inhibiting growth of side branches at 1^{st}, 2^{nd} and 3^{rd} level by applying growth inhibitors such as prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminoside (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations.

The method results in a ready-to-use tree type, characterized in that it has a tree height typically between 1.8 and 2.7 m, in pyramidal form, having three clearly distinguishable branching levels, each with an intersecting "window", the lowest level typically having a width between 15 and 30 % of the desired tree height, as depicted in Figure 1.

## Claims

1. A nursery fruit tree having an optimal fruit/wood production balance having the following characteristics:
- crowns of productive branches at three levels, separated by windows sufficiently large to enable optimal light provision for production and ripening of the fruit,
- an uncut main stem,
- the inclination of the side branches versus the stem approaching 90°.

2. The nursery fruit tree according to claim 1, having a height of between 1.8 and 2.7 m.

3. The nursery fruit tree according to claim 1 or 2, wherein:
- said first branching level is situated at a height of about 25 to 35 % of the tree,
- said second branching level is situated at a height of about 40 to 55 % of the tree height,
- said third branching level is situated at a height of about 60 to 70 % of the tree height.

4. The nursery fruit tree according to claim 1, 2, or 3, comprising sylleptic shoots for the 1^{st} and the 3^{rd} branch level and proleptic shoots for the 2^{nd} branch level.

5. A fruit tree grown from a nursery fruit tree according to any one of claims 1 to 4.

6. A method for obtaining a nursery fruit tree with optimal balance between fruit and wood production, comprising the steps of:
1) planting a scion of the desired fruit producing variety that has been united with a suitable rootstock or rootstock-interstock,
2) during the first growth year:
- harmonising the length of the growing trees and creating a first branching level by inducing branching at the top of the tree, by adding growth regulators when the height of the tree reaches about 20 to 35 % of the desired final height,
- growth inhibition of main stem, by applying a growth inhibitor when the height of the tree reaches about 40 to 55 % of the desired final height,
- selective inhibition of side branching,
3) during the second growth year:
- cutting away the branches competing with the top of the tree above the second branching level,
- stimulating elongation and/or induction of proleptic side branches at the second level and/or first branching level,
- inducing branching at the top of the tree to create a 3^{rd} branching level when the tree reaches a height of about 55 to 70 % of the desired final height, and
- inhibiting growth of side branches at 1^{st}, 2^{nd} and 3^{rd} level.

7. The method according to claim 6, wherein a selective growth regulator for inducing branching selected from the group comprising: BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), or PP528 (ethyl-5-(4-chlorophenyl)-2H-tetrazol-2-yl-acetate), PP938 (dyallyl-succinate), is used.

8. The method according to claim 6 or 7, wherein, a selective inhibitor of the growth of the main stem and/or side branches selected from the group comprising: prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations, is used to regulate the height of the tree.

9. The method according to any one of claims 6 to 8, wherein growth regulators selected from the group comprising: gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations, are used to stimulate elongation and/or induction of proleptic side branches.

10. A nursery fruit tree obtainable by the method according to any one of claims 6 to 9.

## Patentansprüche

1. Baumschulen-Obstbaum mit optimalem Gleichgewicht zwischen Obst- und Holzproduktion mit den folgenden Merkmalen:
- Kronen aus produktiven Ästen auf drei Ebenen, getrennt durch ausreichend große Fenster, dass optimaler Lichteinfall für die Produktion und Reifung des Obstes ermöglicht ist,
- ein ungeschnittener Hauptstamm,
- die Neigung der Seitenäste gegenüber dem Stamm nähert sich an 90° an.

2. Baumschulen-Obstbaum nach Anspruch 1 mit einer Höhe zwischen 1,8 und 2,7 m.

3. Baumschulen-Obstbaum nach Anspruch 1 oder 2, wobei
- die erste Verzweigungsebene sich in einer Höhe von etwa 25 bis 35% des Baums befindet,
- die zweite Verzweigungsebene sich in einer Höhe von etwa 40 bis 55% der Baumhöhe befindet,
- die dritte Verzweigungsebene sich in einer Höhe von etwa 60 bis 70% der Baumhöhe befindet.

4. Baumschulen-Obstbaum nach Anspruch 1, 2 oder 3, der sylleptische Triebe auf der 1. und 3. Verzweigungsebene und proleptische Triebe auf der 2. Verzweigungsebene umfasst.

5. Obstbaum, der aus einem Baumschulen-Obstbaum nach einem der Ansprüche 1 bis 4 gezüchtet worden ist.

6. Verfahren zum Erhalten eines Baumschulen-Obstbaums mit optimalem Gleichgewicht zwischen Obst- und Holzproduktion, das folgende Schritte umfasst:
1) Pflanzen eines Reises der gewünschten obstproduzierenden Sorte, das mit einem geeigneten Wurzelstock oder Wurzelstock/Interstock vereinigt wurde,
2) im ersten Wachstumsjahr:
- Harmonisieren der Länge der wachsenden Bäume und Herstellen einer ersten Verzweigungsebene durch Induzieren von Verzweigung am oberen Ende des Baums durch Zugabe von Wachstumsregulatoren, wenn die Höhe des Baums etwa 20 bis 25% der gewünschten endgültigen Höhe erreicht,
- Wachstumshemmung des Hauptstamms durch Applizieren eines Wachstumsinhibitors, wenn die Höhe des Baums etwa 40 bis 55% der gewünschten endgültigen Höhe erreicht,
- selektive Hemmung der Seitenverzweigung,
3) im zweiten Wachstumsjahr:
- Wegschneiden der Äste, die mit dem oberen Ende des Baums oberhalb der zweiten Verzweigungsebene konkurrieren,
- Stimulieren der Verlängerung und/oder Induktion proleptischer Seitenäste auf der zweiten Ebene und/oder der ersten Verzweigungsebene,
- Induzieren von Verzweigung am oberen Ende des Baums, um eine 3. Verzweigungsebene herzustellen, wenn der Baum eine Höhe von etwa 55 bis 70% der gewünschten endgültigen Höhe erreicht, und
- Hemmen des Wachstums von Seitenästen auf der 1., 2. und 3. Ebene.

7. Verfahren nach Anspruch 6, wobei ein selektiver Wachstumsregulator für die Induktion von Verzweigung, ausgewählt aus der Gruppe, umfassend BA (6-Benzylaminopurin), DPU (N,N'-Diphenylharnstoff), Maleinsäurehydrazid (1,2-Dihydropyridazin-3,6-dion), M&B 25-105 (Propyl-[3-(1,1-dimethylethyl)-phenoxy]-acetat), NC9634 (((3-Phenyl-1,2,4-thiadiazol-5-yl)-thio)-essigsäure), Off-Shoot-O (Gemisch von Methylestern von Fettsäuren) oder PP528 (Ethyl-5-(4-chlorphenyl)-2H-tetrazol-2-ylacetat), PP938 (Dyallylsuccinat) verwendet wird.

8. Verfahren nach Anspruch 6 oder 7, wobei ein selektiver Inhibitor des Wachstums des Hauptstamms und/oder der Seitenäste, ausgewählt aus der Gruppe, umfassend Prohexadion-Ca (Cyclohexancarbonsäure, 3,5-Dioxo-4-(1-oxopropyl), Ion(1-), Calcium), Ethrel (2-Chlorethylphosphonsäure), NAA (Naphthalinessigsäure), Butralin (N-sek.-Butyl-4-tert.-butyl-2,6-dinitroanilin), Chlormequat (2-Chlorethyltrimethylammoniumchlorid), Daminozid (Bernsteinsäure, Mono(2,2-dimethylhydrazid)) oder Paclobutrazol (1-(4-Chlorphenyl)-4,4-dimethyl-2-(1H-1,2,4-triazol-1-yl)-3-pentanol), wobei solche Substanzen allein oder in Kombinationen angewendet werden, dazu verwendet wird, die Höhe des Baums zu regulieren.

9. Verfahren nach einem der Ansprüche 6 bis 8, wobei Wachstumsregulatoren, ausgewählt aus der Gruppe, umfassend Gibberellinsäure (z. B. GA₄, GA₇), BA (6-Benzylaminopurin), DPU (N,N'-Diphenylharnstoff), Maleinsäurehydrazid (1,2-Dihydropyridazin-3,6-dion), M&B 25-105 (Propyl-[3-(1,1-dimethylethyl)-phenoxy]-acetat), NC9634 (((3-Phenyl-1,2,4-thiadiazol-5-yl)-thio)-essigsäure), Off-Shoot-O (Gemisch von Methylestern von Fettsäuren), PP528 (Ethyl-5-(4-chlorphenyl)-2H-tetrazol-2-ylacetat) oder PP938 (Dyallylsuccinat), wobei solche Substanzen allein oder in Kombinationen angewendet werden, dazu verwendet werden, die Verlängerung und/oder Induktion proleptischer Seitenäste zu stimulieren.

10. Baumschulen-Obstbaum, der durch das Verfahren nach einem der Ansprüche 6 bis 9 erhältlich ist.

## Revendications

1. Arbre fruitier de pépinière ayant un équilibre optimal de production de fruits/bois, possédant les caractéristiques suivantes :
- des couronnes de rameaux producteurs à trois niveaux, séparées par des fenêtres suffisamment larges pour permettre un apport de lumière optimal pour la production et la maturation des fruits,
- une tige principale non coupée,
- une inclinaison des rameaux latéraux par rapport à la tige approchant les 90°.

2. Arbre fruitier de pépinière selon la revendication 1, ayant une hauteur comprise entre 1,8 et 2,7 m.

3. Arbre fruitier de pépinière selon la revendication 1 ou 2, **caractérisé en ce que**
- ledit premier niveau de ramification est situé à une hauteur allant d'environ 25 à 35% de l'arbre,
- ledit deuxième niveau de ramification est situé à une hauteur allant d'environ 40 à 55% de la hauteur de larbre,
- ledit troisième niveau de ramification est situé à une hauteur allant d'environ 60 à 70% de la hauteur de l'arbre.

4. Arbre fruitier de pépinière selon la revendication 1, 2 ou 3, comprenant des pousses sylleptiques pour le 1er et le 3ème niveau de rameaux et des pousses proleptiques pour le 2ème niveau de rameaux.

5. Arbre fruitier cultivé à partir d'un arbre fruitier de pépinière selon l'une quelconque des revendications 1 à 4.

6. Méthode d'obtention d'un arbre fruitier de pépinière ayant un équilibre optimal entre la production de fruits et de bois, comprenant les étapes consistant à :
1) planter un scion de la variété désirée productrice de fruits ayant été unie à un porte-greffe ou un porte greffe-greffon intermédiaire, convenable,
2) pendant la première année de croissance :
- harmoniser la longueur des arbres en croissance et créer un premier niveau de ramification en induisant une ramification au niveau de la cime de l'arbre, par l'addition de substances de croissance lorsque la hauteur de l'arbre atteint d'environ 20 à 35% de la hauteur finale désirée,
- l'inhibition de croissance de la tige principale, par l'application d'un inhibiteur de croissance lorsque la hauteur de l'arbre atteint d'environ 40 à 55% de la hauteur finale désirée,
- l'inhibition sélective de la ramification latérale,
3) pendant la deuxième année de croissance :
- couper les rameaux en compétition avec la cime de l'arbre au dessus du deuxième niveau de ramification,
- stimuler l'élongation et/ou l'induction de rameaux latéraux proleptiques au deuxième niveau et/ou au premier niveau de ramification,
- induire la ramification au niveau de la cime de l'arbre afin de créer un 3ème niveau de ramification lorsque l'arbre atteint une hauteur allant d'environ 55 à 70% de la hauteur finale désirée, et
- inhiber la croissance de rameaux latéraux au 1er, 2ème et 3ème niveau.

7. Méthode selon la revendication 6, **caractérisée en ce qu'**on utilise une substance de croissance sélective pour l'induction de la ramification, choisie dans le groupe constitué par : la BA (6-benzylaminopurine), la DPU (N,N'-diphénylurée), l'hydrazide maléique (1,2-dihydropyridazine-3,6-dione), le M&B 25-105 ([3-(1,1-diméthyléthyl)phénoxy]acétate de propyle), le NC9634 (acide ((3-phényl-1,2,4-thiadiazol-5-yl)thio)acétique), le Off-Shoot-O (mélange de méthylesters d'acides gras), ou le PP528 (5-(4-chlorophényl)-2H-tétrazol-2-ylacétate d'éthyle), le PP938 (succinate de diallyle).

8. Méthode selon la revendication 6 ou 7, **caractérisée en ce qu'**on utilise un inhibiteur sélectif de la croissance de la tige principale et/ou des rameaux latéraux choisi dans le groupe constitué par la prohexadione-Ca (acide cyclohexanecarboxylique, 3,5-dioxo-4-(1-oxopropyl)-ion(1-)calcium), l'éthrel (acide 2-chloroéthylphosphonique), le NAA (acide naphtalène-acétique), la butraline (N-sec-butyl-4-tertio-butyl-2,6-dinitroaniline), le chlorméquat (chlorure de 2-chloroéthyltriméthylammonium), le daminozide (acide succinique, mono(2,2-diméthylhydrazide)), ou le paclobutrazol (1-(4-chlorophényl)-4,4-diméthyl-2-(1H-1,2,4-triazol-1-yl)-3-pentanol), de telles substances étant appliquées seules ou en combinaisons, afin de réguler la hauteur de l'arbre.

9. Méthode selon l'une quelconque des revendications 6 à 8, **caractérisée en ce qu'**on utilise des substances de croissance choisies dans le groupe constitué par : l'acide gibbérellique (par exemple, GA₄, GA₇), la BA (6-benzylaminopurine), la DPU (N,N'-diphénylurée), l'hydrazide maléique (1,2-dihydropyridazine-3,6-dione), le M&B 25-105 ([3-(1,1-diméthyléthyl)phénoxy]acétate de propyle), le NC9634 (acide ((3-phényl-1,2,4-thiadiazol-5-yl)thio)acétique), le Off-Shoot-O (mélange de méthylesters d'acides gras), le PP528 (5-(4-chlorophényl)-2H-tétrazol-2-ylacétate d'éthyle), ou le PP938 (succinate de diallyle), de telles substances étant appliquées seules ou en combinaisons, afin de stimuler l'élongation et/ou l'induction de rameaux latéraux proleptiques.

10. Arbre fruitier de pépinière pouvant être obtenu par la méthode selon l'une quelconque des revendications 6 à 9.
